# EUROPÄISCHE PATENTSCHRIFT

(11) **EP 3 221 026 B1**
(45) Veröffentlichungstag und Bekanntmachung des Hinweises auf die Patenterteilung: **23.03.2022**
(21) Anmeldenummer: 15794201.2
(22) Anmeldetag: 13.11.2015
(51) Int. Cl.: F02M 37/42, F02M 37/30, F02M 37/26, B01D 35/18, B01D 36/00, B01D 29/21, B01D 29/58

(54) **FILTERELEMENT MIT ÜBERRAGENDEM BAJONETTVORSPRUNG**
FILTER ELEMENT HAVING PROJECTING BAYONET-TYPE PROTRUSION
ÉLÉMENT FILTRANT AVEC BAÏONNETTE EN SAILLIE

(30) Priorität: 20.11.2014 DE 102014017121
(43) Veröffentlichungstag der Anmeldung: 27.09.2017
(73) Patentinhaber: MANN+HUMMEL GmbH, 71636 Ludwigsburg (DE)
(72) Erfinder: GOEDECKE, Marco, 71665 Vaihingen (DE); BEYERLIN, Holger, 71292 Friolzheim (DE); KRAFT, Gunther, 71642 Ludwigsburg (DE); WILDERMUTH, Andreas, 71672 Marbach (DE); PFLÜGER, Frank, 74343 Sachsenheim (DE)
(74) Vertreter: Mann + Hummel Intellectual Property
(86) Internationale Anmeldenummer: PCT/EP2015/076611
(87) Internationale Veröffentlichungsnummer: WO 2016/079029

(56) Entgegenhaltungen:
- EP-A1- 2 789 375
- WO-A1-2013/083309
- DE-A1-102007 057 380
- DE-U1-202007 017 614
- US-A1- 2008 245 719

## Beschreibung

### Technisches Gebiet

Die Erfindung betrifft ein Filterelement mit einem Filtermedium und einer ersten Endscheibe sowie einen Filter mit einem solchen Filterelement.

### Stand der Technik

Aus der US 2014/0027361 A1 ist ein Wasserfilter bekannt geworden. Der Wasserfilter weist ein Filtermedium auf, das mit einer Endscheibe verbunden ist. An der Endscheibe sind Bajonettvorsprünge ausgebildet, deren freie Enden radial nach innen ragen.

Die US 2003/0141235 A1 offenbart ein Filterelement mit radial nach außen ragenden Rastvorsprüngen.

Aus der DE 20 2007 017 614 U1 ist weiterhin ein Ölfilter bekannt geworden. Der Ölfilter weist ein Filterelement mit radial nach außen gerichteten Bajonettvorsprüngen auf.

Weiterhin offenbart die US 2007/0158263 A1 ein Filterelement mit einem radial nach innen gerichteten, umlaufenden Rastvorsprung.

Die US 2008/0245719 A1 beschreibt ein Filterelement mit Rückhaltemitteln zum Zusammenwirken mit entsprechenden Gegenstücken am Filtergehäuse, welche durch Drehen in Überlapp gebracht werden und durch die Rückstellkraft einer Feder in axialer Anlage verbleiben.

Aus der WO 2013/083309 A1 ist ein Kraftstofffilterelement mit Koaleszenzmedium, welches das Filtermedium radial außen umgibt, offenbart. Im eingebauten Zustand kann sich das Filterelement an Stützelementen im Wassersammelraum abstützen und mit diesen verrastet sein.

Die DE 10 2007 057 380 A1 beschreibt einen Filtereinsatz, welcher in ein Filtergehäuse einsetzbar ist, wobei ein Deckel das Filtergehäuse verschließt und mit einer formschlüssigen Verbindung im Filtergehäuse gehalten ist.

Schließlich sind aus der US D497,972 S und der US 5,154,823 A Filterelemente mit Rasthaken zur Verbindung der Filterelemente an einem Filtergehäuse bekannt geworden.

### Offenbarung der Erfindung

Der Erfindung liegt demgegenüber die Aufgabe zugrunde, ein Filterelement zu schaffen, das mittels einer kompakt aber stabil ausgebildeten Bajonettverbindung in einem Filtergehäuse installierbar ist.

Diese Aufgabe wird durch ein Filterelement mit den Merkmalen des Anspruchs 1 gelöst. Die Unteransprüche geben zweckmäßige Weiterbildungen an.

Die erfindungsgemäße Aufgabe wird somit gelöst durch ein Filterelement für einen Filter, wobei das Filterelement ein Filtermedium und eine mit dem Filtermedium verbundene erste Endscheibe aufweist, wobei an der ersten Endscheibe ein erster Bajonettvorsprung zum Hintergriff einer ersten Bajonettaufnahme eines Filtergehäuses des Filters angeordnet oder ausgebildet ist und wobei der erste Bajonettvorsprung in Bezug auf die Filterelementlängsachse zumindest abschnittsweise radial über das Filtermedium hinausragt und mit seinem freien Ende radial zur Filterelementlängsachse hin vorspringt.

Durch den über das Filtermedium hinaus ragenden ersten Bajonettvorsprung, dessen freies Ende radial nach innen weist, wird im Bereich der ersten Endscheibe Platz für die erste Bajonettaufnahme geschaffen. Das Filterelement ist dadurch sowohl kompakt als auch platzsparend am Filtergehäuse montierbar. Das nach innen gerichtete freie Ende des ersten Bajonettvorsprungs verhindert weiterhin scharfe, nach außen gerichtete Kanten am ersten Bajonettvorsprung, sodass die Verletzungsgefahr beim Wechsel des Filterelements verringert wird.

Vorzugsweise ragt der erste Bajonettvorsprung in Bezug auf die Filterelementlängsachse nicht nur zumindest abschnittsweise über das Filtermedium, sondern zusätzlich dazu auch zumindest abschnittsweise radial über die erste Endscheibe hinaus. Hierdurch bleibt trotz der Bajonettverbindung Raum für weitere Bauelemente zwischen der ersten Endscheibe des Filterelements und dem Filtergehäuse. In diesen Raum kann beispielsweise ein Heizelement eingebaut werden.

Weiter bevorzugt weist das Filterelement eine parallel zur Filterelementlängsachse ausgebildete Anschlagkante auf, um einen Anschlag bei der Montage des Filterelements im Filtergehäuse bereitzustellen.

Der erste Bajonettvorsprung ist bevorzugt einteilig mit der ersten Endscheibe ausgebildet.

Die Herstellung des Filterelements wird vereinfacht, wenn es axialsymmetrisch zu seiner Filterelementlängsachse ausgebildet ist.

An der ersten Endscheibe kann ein zweiter Bajonettvorsprung zum Hintergriff einer zweiten Bajonettaufnahme des Filtergehäuses angeordnet oder ausgebildet sein, wobei der zweite Bajonettvorsprung in Bezug auf die Filterelementlängsachse axialsymmetrisch zu dem ersten Bajonettvorsprung ausgebildet ist.

Der zweite Bajonettvorsprung ist vorzugsweise einteilig mit der ersten Endscheibe ausgebildet.

Weiterhin kann das Filterelement eine zweite Endscheibe aufweisen, wobei das Filtermedium zwischen der ersten Endscheibe und der zweiten Endscheibe angeordnet ist und wobei an der zweiten Endscheibe ein Steg angeordnet oder ausgebildet ist, der sich zumindest abschnittsweise parallel zur Filterelementlängsachse erstreckt. Der Steg dient als Montagehilfe, um das Filterelement ergreifen, drehen und dadurch die Bajonettverbindung zwischen Filterelement und Filtergehäuse lösen zu können. Gleichzeitig kann der Steg als Abstützung des Filterelements im Filtergehäuse dienen.

In besonders bevorzugter Ausgestaltung der Erfindung ist das Filterelement in Form eines Kraftstofffilters, insbesondere eines wasserabscheidenden Kraftstofffilters, ausgebildet. Ein schneller Wasserabfluss aus dem Filterelement wird dabei dann erreicht, wenn das Filterelement eine Wasseraustragungsöffnung, insbesondere einen Sedimentationsspalt, aufweist.

In weiter bevorzugter Ausgestaltung der Erfindung weist das Filterelement ein Endabscheidersieb und/oder ein Koaleszermedium zwischen Filtermedium und Endabscheidersieb auf. Dies ermöglicht eine besonders hohe Wasserabscheidungsrate des Filterelements.

Die Erfindung betrifft weiterhin einen Filter mit einem Filtergehäuse und einem im Filtergehäuse angeordneten zuvor beschriebenen Filterelement, wobei der erste Bajonettvorsprung in eine erste Bajonettaufnahme des Filtergehäuses eingreift. Das Filtergehäuse umfasst bevorzugt einen Filtergehäusekörper und einen über eine Gewindeverbindung mit dem Filtergehäusekörper verbundenen Deckel.

Der Filter ist dabei vorzugsweise derart ausgebildet, dass der Bajonettvorsprung in die Bajonettaufnahme eingreift, wenn der Deckel vom Filtergehäusekörper abgeschraubt wird.

Das Filterelement kann stehend im Filtergehäuse angeordnet sein. In diesem Fall ist die Bajonettaufnahme im Deckel vorgesehen. Bei aufgeschraubtem Deckel ist das Filterelement vom Deckel gelöst. Bei abgeschraubtem Deckel ist das Filterelement mit dem Deckel verbunden. Das Filterelement ist somit beim Filterelementwechsel mitsamt dem Deckel vom Filtergehäusekörper abnehmbar.

Alternativ dazu kann die erste Bajonettaufnahme im Filtergehäusekörper angeordnet oder ausgebildet sein, wobei das Filterelement über die Bajonettaufnahme hängend im Filtergehäuse anordenbar ist. Die erste Endscheibe ist dann im Betriebszustand des Filterelements die obere Endscheibe, die zweite Endscheibe im Betriebszustand die untere Endscheibe des Filterelements. Der Filtergehäusekörper ist insbesondere fest mit einer Zuleitung eines zu filternden Mediums und einer Ableitung des gefilterten Mediums verbunden.

Bei abgeschraubtem Deckel ist das Filterelement bevorzugt mit dem Filtergehäusekörper verbunden. Bei aufgeschraubtem Deckel ist das Filterelement bevorzugt vom Filtergehäusekörper gelöst. Schwingungen während des Betriebs des Filters werden somit nicht vom Filtergehäusekörper auf das Filterelement übertragen. Eine hängende Montage des Filterelements hat weiterhin den Vorteil, dass beim Trennen des Deckels vom Filtergehäusekörper im Deckel enthaltene Flüssigkeit darin gehalten wird und sich nicht mit anderen Flüssigkeiten vermischt oder in die Umgebung entweicht.

Der Deckel weist bevorzugt radial eine geringere lichte Weite auf als der Filtergehäusekörper. Weiterhin kragt der Bajonettvorsprung bevorzugt radial so weit über das Filtermedium hinaus, dass das Filterelement mit dem Bajonettvorsprung voran zwar in den Filtergehäusekörper, nicht jedoch in den Deckel einführbar ist. Auf diese Art und Weise wird ein Montageschutz realisiert, der verhindert, dass das Filterelement bei einem Filterelementwechsel "verkehrt herum" in den Filtergehäusekörper eingesetzt wird.

Der Filter kann eine sich zumindest teilweise in Richtung der Filterelementlängsachse erstreckende Mittelsäule aufweisen, wobei die erste Bajonettaufnahme an der Mittelsäule angeordnet oder ausgebildet ist. Die Mittelsäule erstreckt sich dabei zumindest teilweise entlang der Filterelementlängsachse. Die Mittelsäule führt zu einer besonders kompakten und stabilen Ausbildung des Filters.

Vorzugsweise ist an der Mittelsäule eine zweite Bajonettaufnahme angeordnet oder ausgebildet, um einen zweiten Bajonettvorsprung des Filterelements aufzunehmen.

Besonders bevorzugt ist die Mittelsäule fest mit dem Filtergehäuse verbunden, insbesondere verschweißt. Die Mittelsäule dient dadurch nicht nur zur Bereitstellung der Bajonettaufnahme(n), sondern auch als Einführhilfe beim Wechsel des Filterelements.

Weiter bevorzugt ist ein Heizelement des Filters an der Mittelsäule angeordnet. Das Heizelement ist dabei vorzugsweise fest mit der Mittelsäule verbunden.

An der Mittelsäule kann eine Wasserstandselektrode angeordnet sein. Die Mittelsäule ist dadurch zusätzlich als Wasserstandsdetektor einsetzbar.

Der zuvor beschriebene Steg des Filterelements stützt sich bevorzugt an einem Vorsprung des Filtergehäuses ab.

Das Filterelement weist weiter bevorzugt ein Innendichtungselement zur Trennung einer Rohseite von einem Wassersammelraum des Filters auf, wobei das Innendichtungselement im Bereich der zweiten Endscheibe angeordnet ist.

Bevorzugt ist das Innendichtungselement in Form eines Radialdichtungselements, insbesondere in Form eines O-Rings, ausgebildet. Dies ermöglicht eine konstruktiv besonders einfache Ausbildung des Filterelements.

Besonders bevorzugt ist das Innendichtungselement radial nach außen weisend an der zweiten Endscheibe angeordnet.

Die Dichtheit des Innendichtungselements ist besonders hoch, wenn das Innendichtungselement in einer Innendichtungselementnut angeordnet ist, deren Öffnung radial von der Filterelementlängsachse weg weist. Durch die von der Filterelementlängsachse weg weisende Innendichtungselementnut liegt das Innendichtungselement an einer Innenseite des Filtergehäuses im Betrieb des Filters an.

Bajonettvorsprung und Bajonettaufnahme bilden eine Bajonettverbindung. In der Bajonettverbindung weisen Bajonettvorsprung und Bajonettaufnahme einen Reibschluss zueinander auf. Der Reibungskoeffizient dieses Reibschlusses ist kleiner als der Reibungskoeffizient zwischen dem Innendichtungselement und einem Wandabschnitt des Filtergehäuses, an dem das Innendichtungselement anliegt. Mit anderen Worten ist die Reibung zwischen Innendichtungselement und Filtergehäuse größer als die Reibung zwischen Bajonettvorsprung und Bajonettaufnahme. Hierdurch greift der Bajonettvorsprung in die Bajonettaufnahme ein, wenn der Deckel vom Filtergehäuse abgeschraubt wird und öffnet die Bajonettverbindung, wenn der Deckel auf das Filtergehäuse aufgeschraubt wird.

In besonders bevorzugter Ausgestaltung der Erfindung weist das Filtergehäuse ein Außendichtungselement zwischen Deckel und Filtergehäusekörper auf. Die Verbindung zwischen Filtergehäusekörper und Deckel wird durch das Außendichtungselement zur Umgebung hin abgedichtet, um ein Entweichen von zu filterndem Medium von der Rohseite des Filters in die Umwelt sicher zu vermeiden.

Das Außendichtungselement kann in Form eines Radialdichtungselements, insbesondere in Form eines O-Rings, ausgebildet sein, wobei das Außendichtungselement in einer Außendichtungselementnut angeordnet ist. Hierdurch wird eine hohe Dichtheit der Rohseite des Filters zur Umgebung erzielt.

Vorzugsweise ist das Außendichtungselement im Deckel angeordnet. Das Außendichtungselement ist dann im Verschleißfall leicht zugänglich und austauschbar.

In weiterer Ausgestaltung der Erfindung sind das Außendichtungselement und das Innendichtungselement derart am Filter angeordnet, dass beim Abschrauben des Deckels zunächst die Dichtung des Innendichtungselements und anschließend die Dichtung des Außendichtungselements aufgehoben werden. Mit anderen Worten weist das Außendichtungselement parallel zur Filterelementlängsachse bei der Demontage des Deckels zeitlich länger einen Dichtsitz auf als das Innendichtungselement. Hierdurch wird beim Abschrauben des Deckels Medium von der Rohseite über die aufgehobene Dichtung des Innendichtungselements abgeleitet und erst danach die Verbindung des Filtergehäusekörpers zur Umgebung über die aufgehobene Dichtung des Außendichtungselements hergestellt. Diese Maßnahme verhindert zuverlässig ein Entweichen von zu filterndem Medium von der Rohseite des Filters in die Umgebung. Die beschriebene Maßnahme ist besonders vorteilhaft bei einer hängenden Montage des Filterelements, da das zu filternde Medium in diesem Fall bei einem Abschrauben des Deckels in den Deckel abgeleitet und dort gesammelt wird.

Das Filtergehäuse, insbesondere der Deckel des Filtergehäuses, weist vorzugsweise eine reversibel öffen- und verschließbare Ablassvorrichtung zum Auslass von abgeschiedenem Wasser auf. Zum Auslass von aus dem gefilterten Medium abgetrenntem Wasser muss somit nicht der Deckel vom Filtergehäusekörper abgeschraubt werden, wodurch die Gefahr einer Kontamination der Umgebung mit Medium bzw. die Gefahr einer Vermischung von Flüssigkeiten zwischen Rohseite und Wassersammelraum im Filter weiter reduziert wird.

Beim Service kann somit abgeschiedenes Wasser und gefiltertes Medium über die Ablassvorrichtung ausgelassen werden. Danach kann die Ablassvorrichtung geschlossen und der Deckel abgeschraubt werden, sodass das ungefilterte Medium in den Deckel fließen und entnommen werden kann. Anschließend kann das Filterelement ausgetauscht werden. Zusammenfassend kann somit vor dem Filterelementwechsel Wasser (zusammen mit bereits gefiltertem Medium) getrennt von rohseitigem Medium aus dem Filter abgelassen werden.

Der Filter ist konstruktiv besonders einfach ausgestaltet und dadurch kostengünstig produzierbar, wenn die Ablassvorrichtung in Form eines Stopfens ausgebildet ist.

### Kurze Beschreibung der Zeichnungen

Weitere Merkmale und Vorteile der Erfindung ergeben sich aus der nachfolgenden detaillierten Beschreibung eines Ausführungsbeispiels der Erfindung, anhand der Figuren der Zeichnung, die erfindungswesentliche Einzelheiten zeigt sowie aus den Ansprüchen.

Die in der Zeichnung dargestellten Merkmale sind derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

Es zeigen:
- Fig. 1: eine perspektivische, teilweise geschnittene Ansicht eines Filters in Form eines Kraftstofffilters mit einem Filterelement;
- Fig. 2: eine geschnittene Seitenansicht des Kraftstofffilters aus Fig. 1;
- Fig. 3: eine geschnittene Seitenansicht des Kraftstofffilters gemäß Fig. 2 mit teilweise abgeschraubtem Deckel;
- Fig. 4: eine perspektivische Ansicht des Filterelements von oben;
- Fig. 5: eine perspektivische Ansicht des Filters im Betriebszustand;
- Fig. 6: eine perspektivische Ansicht des Filters gemäß Fig. 5 bei der Demontage des Filterelements; und
- Fig. 7: eine perspektivische Ansicht des Filterelements von unten.

### Ausführungsformen der Erfindung

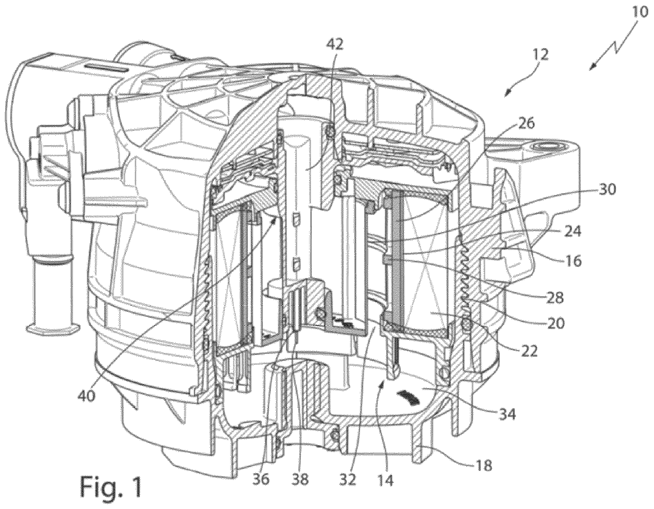

Fig. 1 zeigt einen Filter 10 in Form eines Kraftstofffilters, hier eines Dieselfilters, zum Filtern von Medium in Form von Kraftstoff, hier in Form von Diesel, mit einem Filtergehäuse 12 und einem im Filtergehäuse 12 installierten Filterelement 14. Das Filtergehäuse 12 weist einen Filtergehäusekörper 16 und einen Deckel 18 auf. Der Deckel 18 ist über ein Gewinde 20 auf den Filtergehäusekörper 16 aufgeschraubt. Zum Austausch des Filterelements 14 wird der Deckel 18 vom Filtergehäusekörper 16 abgeschraubt.

Das Filterelement 14 ist schmutzfilternd und mehrstufig wasserabscheidend ausgebildet, um hohe Anforderungen an die Reinheit und Wasserfreiheit des gefilterten Kraftstoffs erfüllen zu können. Das Filterelement 14 weist hierzu ein Filtermedium 22 auf. Das Filtermedium 22 ist mehrfach sternförmig gefaltet, um eine große Oberfläche bereitzustellen. Dem Fluss des Kraftstoffs folgend weist das Filterelement 14 ein an das Filtermedium 22 anschließendes erstes Koaleszermedium 24 in Form eines Vlieses auf.

Am ersten Koaleszermedium 24 bilden sich Wassertröpfchen aus. Auf das erste Koaleszermedium 24 folgt ein gröberes zweites Koaleszermedium 26 zur Vergrößerung der Wassertröpfchen. Das zweite Koaleszermedium 26 liegt innenseitig an einem Stützkörper 28 an. Zwischen dem Stützkörper 28 und einem Endabscheidersieb 30 ist ein Sedimentationsspalt 32 ausgebildet. Das Endabscheidersieb 30 fungiert als "Prallplatte" zur Abscheidung der Wassertröpfchen, die, der Schwerkraft folgend, über den Sedimentationsspalt 32 in einen Wassersammelraum 34 des Filtergehäuses 12 fließen.

Im Filtergehäuse 12 sind zueinander beabstandete Wasserstandselektroden 36, 38 vorgesehen, um das Erreichen der maximalen Füllhöhe des Wassers im Wassersammelraum 34 zu detektieren. Die Wasserstandselektroden 36, 38 sind in einer Mittelsäule 40 angeordnet. Die Mittelsäule 40 weist einen Kraftstoffabfluss 42 auf.

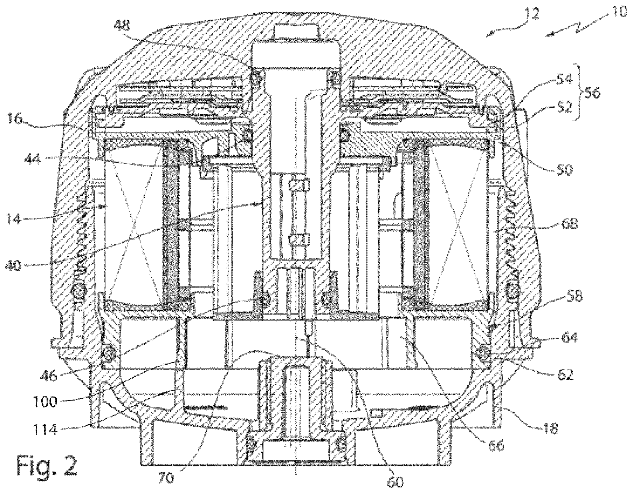

Fig. 2 zeigt den Kraftstofffilter 10 in einer geschnittenen Seitenansicht. Aus Fig. 2 ist ersichtlich, dass die Mittelsäule 40 reversibel lösbar mit dem Filterelement 14 verbunden ist. Die Mittelsäule 40 ist dabei über Dichtringe 44, 46 an das Filterelement 14 gekoppelt. Weiterhin ist die Mittelsäule 40 mit dem Filtergehäusekörper 16 verbunden. Die Mittelsäule 40 ist über einen Dichtring 48 an den Filtergehäusekörper 16 gekoppelt. Die Dichtringe 44, 46, 48 sind jeweils als Radialdichtringe ausgebildet.

Das Filterelement 14 ist hängend am Filtergehäusekörper 16 montiert. Zur Verbindung des Filterelements 14 mit dem Filtergehäusekörper 16 ist an einer ersten Endscheibe 50 des Filterelements 14 ein erster Bajonettvorsprung 52 vorgesehen. Der erste Bajonettvorsprung 52 ist zum Hintergriff einer ersten Bajonettaufnahme 54 des Filtergehäusekörpers 16 ausgebildet. Der erste Bajonettvorsprung 52 und die erste Bajonettaufnahme 54 bilden einen Teil einer Bajonettverbindung 56.

In Fig. 2 ist der Deckel 18 vollständig auf den Filtergehäusekörper 16 aufgeschraubt bzw. teilweise in diesen eingeschraubt. In diesem Zustand ist die Bajonettverbindung 56 geöffnet, d. h. das Filterelement 14 ist schwingungsentkoppelt vom Filtergehäusekörper 16.

Das Filterelement 14 weist eine zweite Endscheibe 58 auf. Die zweite Endscheibe 58 ist der ersten Endscheibe 50 in Richtung einer Filterelementlängsachse 60 entgegengesetzt angeordnet. Die zweite Endscheibe 58 weist eine Innendichtungselementnut 62 auf, deren Öffnung in radialer Richtung von der Filterelementlängsachse 60 weg weist. In der Innendichtungselementnut 62 ist ein Innendichtungselement 64 angeordnet. Das Innendichtungselement 64 ist in Form eines Radialdichtungselements, genauer gesagt in Form eines O-Rings, ausgebildet. Das Innendichtungselement 64 trennt eine Reinseite 66 von einer Rohseite 68 des Kraftstofffilters 10. Das Innendichtungselement 64 verhindert einen Kraftstoffübertritt von der Rohseite 68 auf die Reinseite 66 bzw. in den Wassersammelraum 34.

Der Kraftstofffilter 10 weist eine Ablassvorrichtung 70 in Form eines Stopfens auf. Über die Ablassvorrichtung 70 kann abgeschiedenes Wasser (zusammen mit gereinigtem Kraftstoff) abgelassen werden. Nach dem Ablassen des Wassers kann die Ablassvorrichtung 70 geschlossen werden, um anschließend - und getrennt von Wasser und gereinigtem Kraftstoff - ungereinigten Kraftstoff durch Abschrauben des Deckels 18 abzulassen und das Filterelement 14 zu wechseln.

Das Innendichtungselement 64 liegt unter Reibschluss an einem Wandabschnitt des Deckels 18 an. Die Dichtung zwischen dem Innendichtungselement 64 und des am Innendichtungselement 64 anliegenden Wandabschnitts des Deckels 18 hat dabei einen größeren Reibungskoeffizienten als die Bajonettverbindung 56. Beim Abschrauben des Deckels 18 wird somit das Filterelement 14 mit dem Deckel 18 mitgedreht. Dabei schließt die Bajonettverbindung 56. Wenn die Bajonettverbindung 56 geschlossen ist, sperrt die Bajonettverbindung 56 eine weitere Drehung des Filterelements 14 relativ zum Filtergehäusekörper 16. Bei weiterem Drehen des Deckels 18 (Abschrauben des Deckels 18) erfolgt vielmehr eine Drehung des Deckels 18 relativ zum Filterelement 14. Der Deckel 18 wird also bei mit dem Filtergehäusekörper 16 verbundenem Filterelement 14 vom Filtergehäusekörper 16 abgeschraubt.

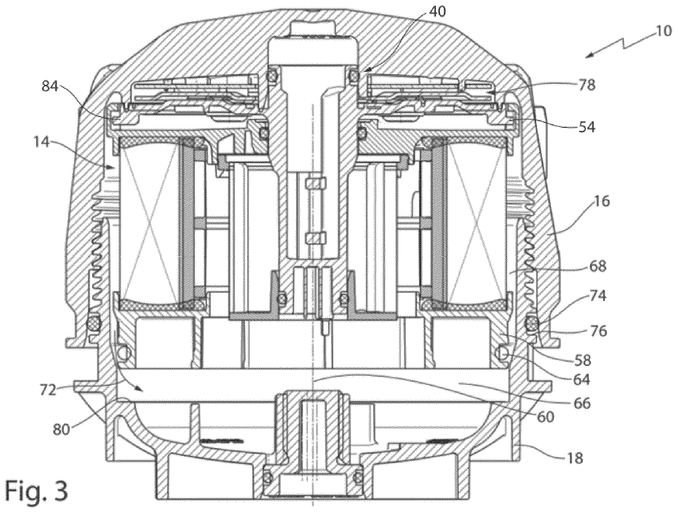

Fig. 3 zeigt den Kraftstofffilter 10 bei teilweise abgeschraubtem Deckel 18. Das Innendichtungselement 64 ist außer Eingriff mit dem Deckel 18. Hierdurch kann ungereinigter Kraftstoff von der Rohseite 68 in Richtung eines Pfeils 72 in den Deckel 18 abfließen. Der ungereinigte Kraftstoff kann somit getrennt von Wasser und gereinigtem Kraftstoff vor dem Filterelementwechsel im Deckel 18 gesammelt werden. Das Austreten von Kraftstoff in die Umwelt wird dabei durch ein Außendichtungselement 74 verhindert. Die Dichtung zwischen Deckel 18 und Filtergehäusekörper 16 durch das Außendichtungselement 74 ist noch geschlossen, wenn die Dichtung zwischen Filterelement 14 und Deckel 18 durch das Innendichtungselement 64 bereits aufgehoben ist. Hierdurch wird der ausschließliche Kraftstoffabfluss in den Deckel 18 beim Abschrauben des Deckels 18 sicher gewährleistet.

Das Außendichtungselement 74 ist in Form eines Radialdichtungselements, hier in Form eines O-Rings, ausgebildet. Das Außendichtungselement 74 ist in einer Außendichtungselementnut 76 angeordnet.

Zur Erwärmung des Kraftstoffs, insbesondere zum Filtern des Dieselkraftstoffs, ist im Kraftstofffilter 10 ein Heizelement 78 vorgesehen. Das Heizelement 78 ist an der Mittelsäule 40 angeordnet. Die Mittelsäule 40 ist fest mit dem Filtergehäusekörper 16 verbunden. An der Mittelsäule 40 sind die erste Bajonettaufnahme 54 und eine zweite Bajonettaufnahme 84 ausgebildet.

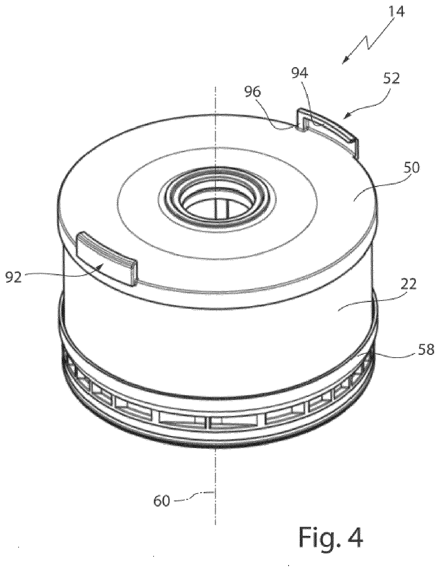

Fig. 4 zeigt das Filterelement 14 in Alleinstellung. Das Filterelement 14 weist die erste Endscheibe 50 und die zweite Endscheibe 58 auf. Zwischen den Endscheiben 50, 58 ist das Filtermedium 22 angeordnet. An der ersten Endscheibe 50 ist der erste Bajonettvorsprung 52 und ein zweiter Bajonettvorsprung 92 ausgebildet. Die Bajonettvorsprünge 52, 92 ragen in Bezug auf die Filterelementlängsachse 60 radial sowohl vollständig über das Filtermedium 22 als auch teilweise über die erste Endscheibe 50 hinaus. Die Bajonettvorsprünge 52, 92 sind axialsymmetrisch zur Filterelementlängsachse 60 ausgebildet. Am Beispiel des ersten Bajonettvorsprungs 52 wird ersichtlich, dass die Bajonettvorsprünge 52, 92 ein freies Ende 94 aufweisen, das radial zur Filterelementlängsachse 60 ragt. Hierdurch werden scharfe, frei nach außen ragende Kanten an den Bajonettvorsprüngen 52, 92 vermieden und ein großer Bauraum oberhalb der ersten Endscheibe 50 zur Anordnung des Heizelements 78 geschaffen. Die Bajonettvorsprünge 52, 92 weisen weiterhin eine Anschlagkante 96 auf.

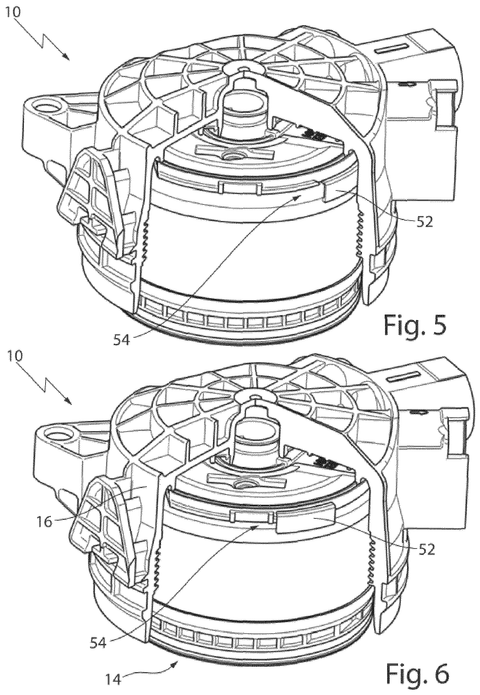

Fig. 5 zeigt den Filter 10 (ohne Deckel) im Betriebszustand. Im Betriebszustand sind die Bajonettvorsprünge - von denen in Fig. 5 der erste Bajonettvorsprung 52 sichtbar ist - außer Eingriff mit den Bajonettaufnahmen - von denen in Fig. 5 die erste Bajonettaufnahme 54 sichtbar ist.

Fig. 6 zeigt demgegenüber den Filter 10 (ohne Deckel) bei der Demontage. Durch Drehen des Deckels 18 (siehe Fign. 2 und 3) gelangen die Bajonettvorsprünge - von denen in Fig. 6 der erste Bajonettvorsprung 52 sichtbar ist - in Eingriff mit den Bajonettaufnahmen - von denen in Fig. 6 die erste Bajonettaufnahme 54 sichtbar ist. Beim Filterelementwechsel hängt dadurch nach dem Abschrauben des Deckels 18 das Filterelement 14 am Filtergehäusekörper 16.

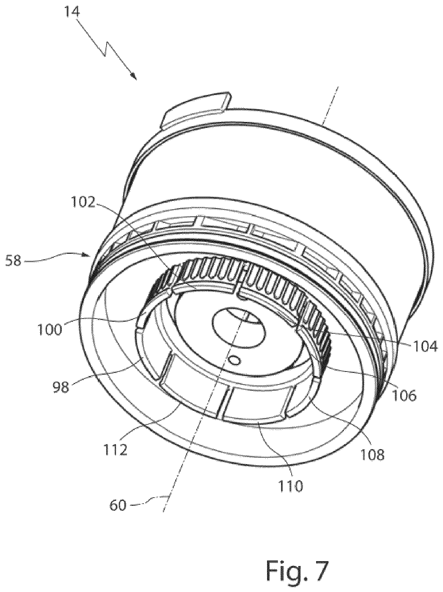

Fig. 7 zeigt das Filterelement 14 in einer Ansicht von unten. Das Filterelement 14 weist an seiner zweiten Endscheibe 58 mehrere Stege 98, 100, 102, 104, 106, 108, 110, 112 auf. Die Stege 98, 100, 102, 104, 106, 108, 110, 112 dienen als Drehgriff für das Filterelement 14. Weiterhin dienen die Stege 98, 100, 102, 104, 106, 108, 110, 112 im montierten Zustand des Filterelements 14 als Abstützung gegenüber dem Deckel 18, wie aus Fig. 2 ersichtlich wird, die beispielhaft die Abstützung des Steges 100 an einem Vorsprung 114 des Deckels 18 zeigt. Die Stege 98, 100, 102, 104, 106, 108, 110, 112 sind axialsymmetrisch zur Filterelementlängsachse 60 ausgebildet.

Zusammenfassend betrifft die Erfindung ein Filterelement mit einem Filtermedium. Das Filterelement ist über zumindest einen Bajonettvorsprung des Filterelements mit einem Filtergehäuse eines Filters verbindbar. Der Bajonettvorsprung ragt radial, d. h. senkrecht zur mittigen Längsachse des Filterelements, über das Filtermedium hinaus. Weiterhin weist das freie Ende des Bajonettvorsprungs in Richtung der mittigen Filterelementlängsachse. Die erfindungsgemäße Ausbildung des Bajonettvorsprungs schafft einen großen freien Bauraum im Bereich des Bajonettvorsprungs und vermeidet Verletzungen, da das freie Ende des Bajonettvorsprungs radial nach innen ragt.

## Patentansprüche

1. Filterelement (14) für einen Filter (10), wobei das Filterelement (14) ein Filtermedium (22) und eine mit dem Filtermedium (22) verbundene erste Endscheibe (50) aufweist, wobei an der ersten Endscheibe (50) ein erster Bajonettvorsprung (52) zum Hintergriff einer ersten Bajonettaufnahme (54) eines Filtergehäuses (12) des Filters (10) angeordnet oder ausgebildet ist und wobei der erste Bajonettvorsprung (52) in Bezug auf die Filterelementlängsachse (60) zumindest abschnittsweise radial über das Filtermedium (22) hinausragt und mit seinem freien Ende (94) radial zur Filterelementlängsachse (60) hin vorspringt.

2. Filterelement nach Anspruch 1, bei dem der erste Bajonettvorsprung (52) in Bezug auf die Filterelementlängsachse (60) zumindest abschnittsweise radial über die erste Endscheibe (50) hinausragt.

3. Filterelement nach Anspruch 1 oder 2, bei dem der erste Bajonettvorsprung (52) eine parallel zur Filterelementlängsachse (60) ausgebildete Anschlagkante (96) aufweist.

4. Filterelement nach einem der vorhergehenden Ansprüche, bei dem an der ersten Endscheibe (50) ein zweiter Bajonettvorsprung (92) zum Hintergriff einer zweiten Bajonettaufnahme (84) des Filtergehäuses (12) angeordnet oder ausgebildet ist, wobei der zweite Bajonettvorsprung (92) in Bezug auf die Filterelementlängsachse (60) axialsymmetrisch zu dem ersten Bajonettvorsprung (52) ausgebildet ist.

5. Filterelement nach einem der vorhergehenden Ansprüche, bei dem das Filterelement (14) eine zweite Endscheibe (58) aufweist, wobei das Filtermedium (22) zwischen der ersten Endscheibe (50) und der zweiten Endscheibe (58) angeordnet ist und wobei an der zweiten Endscheibe (58) ein Steg (98, 100, 102, 104, 106, 108, 110, 112) angeordnet oder ausgebildet ist, der sich zumindest abschnittsweise parallel zur Filterelementlängsachse (60) erstreckt.

6. Filter (10) mit einem Filtergehäuse (12) und einem im Filtergehäuse (12) angeordneten Filterelement (14) nach einem der vorhergehenden Ansprüche, wobei der erste Bajonettvorsprung (52) in eine erste Bajonettaufnahme (54) des Filtergehäuses (12) eingreift.

7. Filter nach Anspruch 6, bei dem der Filter (10) eine sich zumindest teilweise in Richtung der Filterelementlängsachse (60) erstreckende Mittelsäule (40) aufweist, wobei die erste Bajonettaufnahme (54) an der Mittelsäule (40) angeordnet oder ausgebildet ist.

8. Filter nach Anspruch 7, bei dem ein Heizelement (78) des Filters (10) an der Mittelsäule (40) angeordnet ist.

9. Filter nach Anspruch 7 oder 8, bei dem eine Wasserstandselektrode (36, 38) an der Mittelsäule (40) angeordnet ist.

10. Filter nach einem der Ansprüche 6 bis 9 in Verbindung mit Anspruch 5, bei dem sich der Steg (98, 100, 102, 104, 106, 108, 110, 112) an einem Vorsprung (114) des Filtergehäuses (12) abstützt.

## Claims

1. Filter element (14) for a filter (10), wherein the filter element (14) features a filter media (22) and a first end disc (50) connected to the filter media (22), wherein a first bayonet projection (52) for gripping behind a bayonet holder (54) of a filter housing (12) of the filter (10) is disposed or provided on the first end disc (50) and wherein the first bayonet projection (52) projects with respect to the longitudinal axis of the filter element (60) at least sectionwise radially beyond the filter media (22) and protrudes with its free end (94) radially towards the longitudinal axis of the filter element (60).

2. Filter element according to claim 1, wherein the first bayonet projection (52) protrudes, with regard to the longitudinal axis of the filter element (60), at least sectionwise radially beyond the first end disc (50).

3. Filter element according to claim 1 or 2, wherein the first bayonet projection (52) features an abutment edge (96) arranged parallel to the longitudinal axis of the filter element (60).

4. Filter element according to one of the preceding claims, wherein a second bayonet projection (92) for gripping behind a second bayonet holder (84) of the filter housing (12) is designed or provided on the first end disc (50), wherein the second bayonet projection (92) is with regard to the longitudinal axis of the filter element (60) designed axisymmetrically to the first bayonet projection (52).

5. Filter element according to one of the preceding claims, wherein the filter element (14) features a second end disc (58), wherein the filter media (22) is disposed between the first end disc (50) and the second end disc (58) and wherein a web (98, 100, 102, 104, 106, 108, 110, 112), which extends at least sectionwise parallel to the longitudinal axis of the filter element (60), is disposed or provided on the second end disc (58).

6. Filter (10) with a filter housing (12) and a filter element (14) disposed in the filter housing (12) according to one of the preceding claims, wherein the first bayonet projection (52) engages into a first bayonet holder (54) of the filter housing (12).

7. Filter according to claim 6, wherein the filter (10) features a central column (40) extending at least partially in the direction of the longitudinal axis of the filter element (60), wherein the first bayonet holder (54) is disposed or provided on the central column (40).

8. Filter according to claim 7, wherein a heating element (78) of the filter (10) is disposed on the central column (40).

9. Filter according to claim 7 or 8, wherein a water level electrode (36, 38) is disposed on the central column (40).

10. Filter according to one of the claims 6 to 9 in conjunction with claim 5, wherein the web (98, 100, 102, 104, 106, 108, 110, 112) rests against a projection (114) of the filter housing (12).

## Revendications

1. Élément filtrant (14) pour un filtre (10), dans lequel l'élément filtrant (14) présente un milieu filtrant (22) et un premier disque d'extrémité (50) connecté au milieu filtrant (22), dans lequel une première saillie à baïonnette (52) destinée à s'engager derrière un premier logement à baïonnette (54) d'un boîtier de filtre (12) du filtre (10) est disposée ou réalisée sur le premier disque d'extrémité (50) et dans lequel la première saillie à baïonnette (52) dépasse, par rapport à l'axe longitudinal de l'élément filtrant (60), au moins dans certaines sections, radialement le milieu filtrant (22) et fait saillie avec son extrémité libre (94) radialement vers l'axe longitudinal de l'élément filtrant (60).

2. Élément filtrant selon la revendication 1, dans lequel la première saillie à baïonnette (52) dépasse, par rapport à l'axe longitudinal de l'élément filtrant (60), au moins dans certaines sections, radialement le premier disque d'extrémité (50).

3. Élément filtrant selon la revendication 1 ou 2, dans lequel la première saillie à baïonnette (52) présente une arête de butée (96) évoluant de manière parallèle à l'axe longitudinal de l'élément filtrant (60).

4. Élément filtrant selon l'une quelconque des revendications précédentes, dans lequel une seconde saillie à baïonnette (92) destinée à s'engager derrière un second logement à baïonnette (84) du boîtier de filtre (12) est disposée ou réalisée sur le premier disque d'extrémité (50), dans lequel la seconde saillie à baïonnette (92) est réalisée, par rapport à l'axe longitudinal de l'élément filtrant (60), de manière axisymétrique à la première saillie à baïonnette (52).

5. Élément filtrant selon l'une quelconque des revendications précédentes, dans lequel l'élément filtrant (14) présente un second disque d'extrémité (58), dans lequel le milieu filtrant (22) est disposé entre le premier disque d'extrémité (50) et le second disque d'extrémité (58) et dans lequel une nervure (98, 100, 102, 104, 106, 108, 110, 112), qui s'étend au moins dans certaines sections de manière parallèle à l'axe longitudinal de l'élément filtrant (60), est disposée ou réalisée sur le second disque d'extrémité (58).

6. Filtre (10) avec un boîtier de filtre (12) et un élément filtrant (14) disposé dans le boîtier de filtre (12) selon l'une quelconque des revendications précédentes, dans lequel la première saillie à baïonnette (52) s'engrène dans un premier logement à baïonnette (54) du boîtier de filtre (12).

7. Filtre selon la revendication 6, dans lequel le filtre (10) présente une colonne centrale (40) s'étendant au moins en partie dans le sens de l'axe longitudinal de l'élément filtrant (60), dans lequel le premier logement à baïonnette (54) est disposé ou réalisé sur la colonne centrale (40).

8. Filtre selon la revendication 7, dans lequel un élément de chauffage (78) du filtre (10) est disposé sur la colonne centrale (40).

9. Filtre selon la revendication 7 ou 8, dans lequel une électrode de niveau d'eau (36, 38) est disposée sur la colonne centrale (40).

10. Filtre selon l'une quelconque des revendications 6 à 9 en combinaison avec la revendication 5, dans lequel la nervure (98, 100, 102, 104, 106, 108, 110, 112) repose sur une saillie (114) du boîtier de filtre (12).
